# EUROPÄISCHE PATENTSCHRIFT

(11) **EP 0 932 780 B1**
(45) Veröffentlichungstag und Bekanntmachung des Hinweises auf die Patenterteilung: **31.10.2001**
(21) Anmeldenummer: 97905137.2
(22) Anmeldetag: 28.02.1997
(51) Int. Cl.: F16K 3/20

(54) **EINPLATTEN-SCHIEBER, INSBESONDERE EINPLATTEN-ROHRBRÜCKENSCHIEBER**
SINGLE PLATE SLIDER, ESPECIALLY PIPE BRIDGE SINGLE PLATE SLIDER
COULISSE COMPOSEE D'UNE PLAQUE UNIQUE, EN PARTICULIER COULISSE A PONT TUBULAIRE COMPOSEE D'UNE PLAQUE UNIQUE

(30) Priorität: 23.10.1996 DE 19644135; 13.11.1996 DE 19646908
(43) Veröffentlichungstag der Anmeldung: 04.08.1999
(73) Patentinhaber: Zimmermann & Jansen GmbH, D-52355 Düren (DE)
(72) Erfinder: MARX, Norbert, D-52355 Düren (DE); NÄGLER, Günter, D-52249 Eschweiler (DE)
(74) Vertreter: Popp, Eugen, Dr.
(86) Internationale Anmeldenummer: EP9701015
(87) Internationale Veröffentlichungsnummer: WO9817934

(56) Entgegenhaltungen:
- EP-A- 0 207 755
- EP-B- 0 450 646
- DE-B- 2 003 311
- DE-C- 324 654
- DE-U- 8 008 316
- DE-U- 9 212 505
- FR-A- 1 177 223
- FR-A- 1 379 789
- GB-A- 915 442
- US-A- 2 857 129
- US-A- 4 513 947
- US-A- 4 561 472
- US-A- 4 655 241
- US-A- 5 163 655

## Beschreibung

Die Erfindung betrifft einen Einplatten-Schieber, gemäß dem Oberbegriff des Anspruches 1.

Es sind die unterschiedlichsten Konstruktionen von Doppelund Einplatten-Schiebern, insbesondere auch Rohrbrückenschiebern bekannt (siehe Prospekt Nr. 300, II/82 der Anmelderin mit dem Titel "Amaturen und Einrichtungen für Prozesse in Raffinerien, Petrochemie, Chemie-Programm III; DE-U-80 08 316 oder die ebenfalls auf die Anmelderin zurückgehende EP-B-0 450 646), denen allesamt das Ziel zugrundeliegt, einen leichtgängigen Schieber mit hoher Dichtwirkung bereitzustellen. Rohrbrückenschieber als Flach-, Oval- und Rundschieber sind sowohl in Form von Einplattenschiebern als auch in Form von Doppelplattenschiebern (Keil-im-Keil-Prinzip) bekannt, und zwar mit steigender Spindel und geradem, rohrförmigem Durchgang in Offenstellung. Im vorliegenden Fall geht es um eine konkrete Weiterentwicklung der Abdichtung zwischen Schieberplatte bzw. Rohrbrücke einerseits und Gehäuse andererseits. Von besonderer Bedeutung ist die vorgenannte Abdichtung bei sogenannten Rohrbrückenschiebern. Derartige Schieber kommen dann zur Anwendung, wenn in der Offenstellung des Schiebers eine Abdichtung seines Durchflußraumes bzw. Fluiddurchgangs gegenüber dem übrigen Gehäuseinnenraum und damit auch gegenüber der äußeren Umgebung verlangt wird. Dies ist insbesondere der Fall, wenn es sich um einen Fluid- bzw. Gasstrom mit Verunreinigungen aus sublimierenden Stoffen handelt, weil diese sich sonst in nicht abgeschlossenen Gehäuseteilen anlagern und zu einer Totalverstopfung und somit zu einer Verhinderung der Schieberbetätigung führen können. Derartige Schieber werden insbesondere für den Transport staubhaltiger Gase, aber auch stark verschmutzter flüssiger Medien eingesetzt, z. B. in Kohlevergasungsanlagen, Verbrennungsanlagen, chemischen Anlagen, Pipelines oder dergleichen.

Aus der DE-C-868 543 ist ein Doppelplattenschieber bekannt geworden, dessen Rohrbrücke sich aus einem elastischen Wellrohr mit stirnseitig angeordneten Gleit- und Dichtringen zusammensetzt. Die Rohrbrücke ist in einem rohrförmigen Gehäuseteil der Schieberplatte untergebracht, welches gleichzeitig zur Halterung und Führung der Rohrbrücke dient. In der Offenstellung des Schiebers werden die Gleitringe gegen die Gehäusedichtsitze durch die Elastizität des Wellrohres sowie durch die Spreizwirkung einer Keilvorrichtung angepreßt. Diese bekannte Konstruktion hat den Nachteil, daß zur Erzielung einer ausreichend hohen Dichtigkeit die Vorspannung des elastischen Wellrohres relativ hoch eingestellt sein muß. Die Folge ist, daß beim Verschieben der Rohrbrücke deren Dichtringe mit einer relativ großen Anpreßkraft an den gegenüberliegenden Dichtsitzen des Schiebergehäuses entlanggleiten. Dadurch entsteht eine beträchtliche Reibung zwischen den anliegenden Dichtflächen, so daß erhebliche Betätigungskräfte zum Umschalten des Schiebers erforderlich sind. Zur Vermeidung dieser Nachteile wird in der DE-U-80 08 316 vorgeschlagen, die Dichtringe der Rohrbrücke an einer Verlängerung der Betätigungsstange für die Schieberplatte aufzuhängen und mit einer Rückstellvorrichtung zu versehen, die an den Dichtringen befestigte Rollen aufweisen, welche auf im Gehäuse angebrachten Betätigungsleisten mit im Bereich des Schieberdurchgangs angeordneten Einlaufnuten für die Rollen laufen. Diese kombinierte Spreiz- und Lösevorrichtung soll zum einen eine sichere Anpressung der Dichtringe in der Offenstellung des Schiebers und zum anderen die freie Beweglichkeit der Rohrbrücke entlang der beiden Gehäusedichtsitze beim Betätigen des Schiebers gewährleisten. Zusätzlich wird noch vorgeschlagen, auch die Absperrplatten der Schieberplatte mit Rollen zu versehen, die in Schließstellung in die Einlaufnuten der Betätigungsleisten laufen, um vor allem bei hohen Differenzdrücken ein Verschieben der Absperrplatten mit geringst möglicher Reibung und ohne Beschädigung der Dichtflächen zu ermöglichen. Konkret ist die Rohrbrücke aus zwei Dichtringen sowie einem die Dichtringe miteinander verbindenden Kompensator zusammengesetzt. Die Dichtringe sind so bemessen, daß ihr Durchmesser mit dem der Gehäusedichtsitze übereinstimmt. Der Kompensator besteht aus einem elastischen, wellig gebogenen Blechring, der so eingebaut ist, daß Schmutzablagerungen von selbst weggesprengt werden, wenn der Kompensator zusammengedrückt oder auseinandergedrückt wird. Die Dichtringe werden in der Offenstellung des Schiebers mittels einer Keilvorrichtung aufgespreizt, die zwar im Schiebergehäuse ortsfest und seitlich angeordnete Gehäuseteile aufweist, welche in der Offenstellung des Schiebers mit je zwei an den Dichtringen angeordneten Plattenkeilen zusammenwirken. Die Rohrbrücke weist ferner eine Rückstellvorrichtung mit je vier Rollen auf, die an den Dichtringen seitlich und paarweise symmetrisch zu deren Mittelachse befestigt sind. Die Rollen laufen auf vier im Schiebergehäuse angebrachten Betätigungsleisten, welche im Bereich des Schieberdurchganges mit Einlaufnuten für die Rollen versehen sind. Auch die Absperrplatten weisen je vier Rollen auf, die auf den vorgenannten Betätigungsleisten laufen. Die lichte Weite zwischen den Betätigungsleisten und der Nuttiefe der Einlaufnuten sind so bemessen, daß sowohl die Absperrplatten als auch die Dichtringe der Rohrbrücke in der Schließstellung bzw. in der Offenstellung des Schiebers durch den Innenkeil bzw. die Gehäusekeile gasdicht gegen die Gehäusedichtsitze angepreßt sind, während sie außerhalb dieser beiden Schaltstellungen in einem Abstand von den Gehäusedichtsitzen geführt werden. Die vorgenannte Beschreibung der bekannten Konstruktion läßt erkennen, daß es sich um eine relativ aufwendige Konstruktion handelt. Viele einzelne Bauteile müssen hinsichtlich ihres Bewegungsablaufes aufeinander abgestimmt werden. Bei der Herstellung des bekannten Doppelplattenschiebers mit Rohrbrücke ist daher höchste Präzision gefordert. Des weiteren beinhaltet die bekannte Konstruktion eine Vielzahl von Verschleißteilen, sowie Teilen, die einer gesonderten Reinigung nach vorbestimmter Gebrauchsdauer bedürfen. Vor allem nachteilig ist die beschriebene mechanische Zwangssteuerung der Dichtringe der Rohrbrücke im Verhältnis zu den Dichtsitzen des Schiebergehäuses.

Eine erhebliche Vereinfachung demgegenüber stellt die Doppelplattenschieber-Konstruktion der Anmelderin gemäß der EP-B-0 450 646 dar. Doch auch diese Konstruktion ist gekennzeichnet durch eine Rohrbrücke, welche zwei durch einen Kompensator miteinander verbundene Dichtringe aufweist.

Im vorliegenden Fall geht es nun konkret um einen gegenüber dem Stand der Technik hinsichtlich Leichtgängigkeit einerseits und Dichtwirkung andererseits verbesserten Einplatten-Schieber.

Die DE-C 324 654 betrifft einen solchen gattungsgemäßen Einplatten-Schieber mit einer Schieberplatte, die zum Verschließen oder Öffnen eines in einem Gehäuse ausgebildeten Fluiddurchgangs durch eine Betätigungseinrichtung innerhalb dieses Gehäuses verschiebbar ist. Die Schieberplatte weist randseitig Dichtflächen auf, die mit gehäuseseitig angeordneten Dichtflächen korrespondieren. Wenigstens eine der gehäuseseitigen Dichtflächen ist Teil eines im Gehäuse angeordneten Dichtringes, der unter elastischer Vorspannung an der zugewandten Dichtfläche der Schieberplatte anliegt. Die Konstruktion des elastisch vorgespannten Dichtringes erscheint wenig robust und erlaubt bei der Montage des Dichtringes selbst keinen Ausgleich von Toleranzen in axialer oder auch in radialer Richtung.

Die US A 4 513 947 bezieht sich ebenso wie DE-B 20 03 311 auf einen Einplatten-Schieber mit einer Schieberplatte zum Verschließen oder Öffnen eines in einem Gehäuse ausgebildeten Fluiddurchgangs, wobei der Schieberplatte elastisch vorgespannte Dichtringe zugeordnet sind. Auch diese Dichtringe erlauben bei der Montage keinen Ausgleich von Toleranzen in axialer und radialer Richtung ohne Verlust der Abdichtfunktion.

Die US A 5 163 655 zeigt verschiedene Abdichtkonstruktionen für Bauteile eines Ventils. Die dem Ventilkörper zugeordneten Dichtringe sind sowohl radial als auch axial elastisch vorgespannt, wobei die konkret dargestellte Konstruktion relativ aufwendig ist aufgrund der Tatsache, daß die vorgenannte elastische Vorspannung durch voneinander getrennte "Federelemente" erfolgt. Eine solche Konstruktion wäre auf Plattenschieber schlecht übertragbar.

Die FR-A 1 177 223 betrifft einen Einplatten-Schieber mit einer Schieberplatte, die zum Verschließen oder Öffnen eines in einem Gehäuse ausgebildeten Fluiddurchgangs durch eine Betätigungseinrichtung innerhalb dieses Gehäuses verschiebbar ist. Die die Schieberplatte gegenüber ihrer Umgebung abdichtenden Dichtelemente sind nur axial federelastisch vorgespannt, so daß radiale Toleranzen nicht ausgeglichen werden können.

EP-A 0 207 755 bezieht sich auf ein Kugelventil, das einen Dichtring mit einer ringförmig umlaufenden Keilfläche umfaßt, die jedoch mit der sphärischen Oberfläche des Kugelventils zusammenwirkt. Aufgrund des Anpassens des Dichtringes an die sphärische Oberfläche muß dieser Dichtring notgedrungen etwa keilförmig ausgebildet sein. Eine umlaufende Ringwand, die einen unter elastischer Vorspannung stehenden Ringkeil, der mit der Keilfläche zusammenwirkt, aufnimmt, ist nicht als eine radial innere oder äußere Begrenzung einer den Dichtring aufnehmenden Ringnut ausgebildet. Eine optimale Abdichtung des Ventilgehäuses gegenüber dem Fluiddurchgang bzw. des Fluiddurchgangs gegenüber der äußeren Umgebung ist somit nicht gewährleistet.

Der vorliegenden Erfindung liegt die Aufgabe zugrunde, einen Einplattenschieber zu schaffen, der sich gegenüber dem Stand der Technik durch eine verbesserte Dichtwirkung bei unveränderter Leichtgängigkeit auszeichnet.

Diese Aufgabe wird erfindungsgemäß durch die kennzeichnenden Merkmale des Anspruches 1 gelöst, wobei bevorzugte konstruktive Weiterentwicklungen in den Unteransprüchen beschrieben sind.

Erfindungsgemäß weist ein elastisch vorgespannter Dichtring an seiner einer Schieberplatte bzw.Rohrbrücke abgewandten Seite eine ringförmig umlaufende Keilfläche auf, gegen die ein unter elastischer Vorspannung stehender Ringkeil drückbar ist, wobei der Ringkeil sich an der Keilfläche des Dichtrings einerseits und an einer umlaufenden Ringwand, nämlich an einer radial inneren oder radial äußeren Begrenzung einer den Dichtring aufnehmenden Ringnut, im Gehäuse andererseits abstützt. Die Abstützung erfolgt derart, daß dadurch zugleich eine Abdichtung des Gehäuses gegenüber dem Fluiddurchgang bzw. des Fluiddurchgangs gegenüber der äußeren Umgebung erhalten wird.

Darüberhinaus ist die Konstruktion besonders für Reparaturen vorteilhaft, da sie erlaubt, Toleranzen auszugleichen, und zwar sowohl in axialer als auch radialer Richtung. Dieser Toleranzausgleich mit gleichzeitiger Abdichtfunktion in axialer und radialer Richtung wird durch den vorgesehenen Ringkeil gewährleistet.

Entsprechend Anspruch 2 handelt es sich bei der erfindungsgemäßen Dichtung vorzugsweise um eine metallische Dichtung. Dementsprechend ist die am Dichtring ausgebildete Dichtfläche eine entsprechend bearbeitete, insbesondere durch Schleifen und Polieren bearbeitete Fläche einer Aufpanzerung an der der Schieberplatte bzw. Rohrbrücke zugewandten Seite des Dichtrings.

Schließlich sei noch auf die Ausführungsform nach den Ansprüchen 4 bis 6 hingewiesen, die sich dadurch auszeichnet, daß die Dichtringe aus weichelastischem Material bestehen. Um eine Beschädigung dieser Dichtringe zu vermeiden, sind diesen in Richtung von radial innen nach radial außen gesehen jeweils Abstreifringe aus Hartmetall vorgeordnet, die Anbackungen oder dgl. Ablagerungen an der Schieberplatte und/oder Rohrbrücke bei Betätigung dieser Organe abstreifen, so daß dadurch die weichelastischen Dichtringe nicht beschädigt werden können.

Zur Fluidabdichtung zwischen Fluiddurchgang und Gehäuseinnerem bzw. äußerer Umgebung sind sowohl die Dichtringe als auch die Abstreifringe gehäuseseitig über weichelastische Flachdichtungen abgestützt, die vorzugsweise aus papierenem und/oder textilem Material bestehen. Auch Graphitmaterial ist dafür denkbar.

Die vorliegende Erfindung ermöglicht es also, eine Dichtkonstruktion für eine Einplatten-Schieberanordnung, insbesondere einen Einplatten-Rohrbrückenschieber Zu schaffen, wobei die Dichtflächen jeweils metallisch sind. Wenigstens eine Dichtfläche, insbesondere gehäuseseitige Dichtfläche ist elastisch vorgespannt, um die erforderliche Dichtwirkung zu gewährleisten.

Nachstehend wird eine Ausführungsform eines erfindungsgemäß ausgebildeten Schiebers anhand der beigefügten Zeichnungen näher erläutert. Diese zeigen in
- Figur 1: einen Einplatten-Rohrbrückenschieber unter Darstellung der Rohrbrücke im Schnitt, wobei verschiedene metallische Gehäusedichtungen gezeigt sind;
- Figur 2: ein Teil einer erfindungsgemäßen Ausführungsform einer metallischen Gehäusedichtung im Schnitt, wobei sich diese Gehäusedichtung insbesondere für Reperaturzwecke eignet;

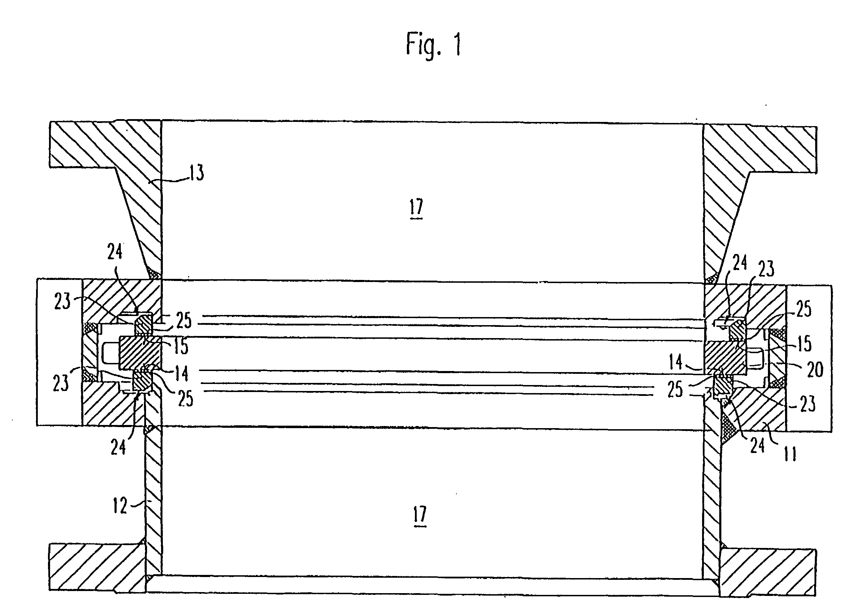

zum besseren Verständnis der Funktion einer einem Einplatten-Rohrbrückenschieber zugeordneten Ringdichtung wird anhand der Figur 1 ein Teil der Grundkonstruktion eines solchen Einplatten-Rohrbrückenschiebers beschrieben. Dementsprechend weist dieser Einplatten-Rohrbrückenschieber ein Schiebergehäuse 11 mit zwei Rohrstutzen 12 und 13 sowie zwei Gehäusedichtsitzen bzw. - dichtflächen 14 und 15 auf, zwischen welchen eine Schieberplatte hin- und herverschiebbar ist, und zwar senkrecht zu dem durch die Rohrstutzen 12 und 13 definierten Fluiddurchgang 17 im Gehäuse 11. Die Betätigung der Schieberplatte erfolgt durch einen hier nicht näher beschriebenen Antrieb, der über eine Betätigungsstange mit der Schieberplatte verbunden ist. Unmittelbar neben der Schieberplatte ist eine sogenannte Rohrbrücke 20 ausgebildet. Die Rohrbrücke 20 wird im konkreten Fall durch eine entsprechende Bohrung in der Schieberplatte gebildet. Die Rohrbrücke 20 wirkt in der Offenstellung des Schiebers ebenfalls mit den gehäuseseitigen Dichtflächen 14 und 15 zusammen.

Figur 1 enthält vier verschiedene jeweils gehäuseseitig elastisch vorgespannte Ring- bzw. Gehäusedichtungen in Zuordnung zu der Rohrbrücke 20.

Allen vier Gehäusedichtungen ist gemeinsam, daß die gehäuseseitige Dichtfläche 14 bzw. 15 Teil eines im Gehäuse 11 angeordneten Dichtringes 23 ist, der unter elastischer Vorspannung gegen die zugewandte Dichtfläche der Schieberplatte bzw. Rohrbrücke 20 preßbar ist. Die am Dichtring 23 ausgebildete Dichtfläche 14 bzw. 15 ist des weiteren jeweils eine entsprechend bearbeitete, insbesondere durch Schleifen und Polieren bearbeitete Fläche einer Aufpanzerung 25 an der der Schieberplatte bzw. Rohrbrücke 20 zugewandten Seite des Dichtrings 23.

Die elastische Vorspannung des bzw. der Dichtringe 23 ist in Figur 1 mit der übergeordneten Bezugsziffer 24 gekennzeichnet. Die elastische Vorspannung 24 wirkt axial, d. h. in Richtung parallel zur Durchflußrichtung des Fluids durch den Fluiddurchgang 17.

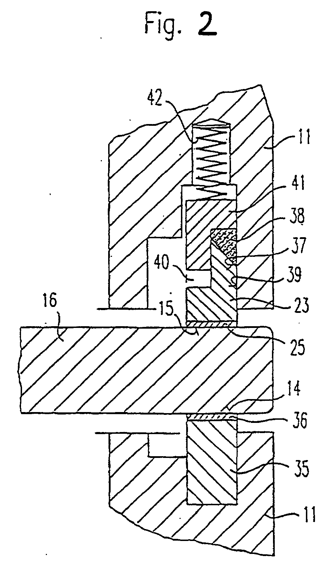

Figur 2 zeigt einen Schnitt durch ein dargestelltes Ausführungsbeispiel einer einer Schieberplatte.16 zugeordneten Gehäusedichtung, wobei die an der Druckseite liegende Gehäusedichtung in axialer Richtung gegen die Schieberplatte 16 bzw. gegen eine an dieser randseitig ausgebildete Dichtfläche elastisch vorgespannt ist. Die gegenüberliegend angeordnete Gehäusedichtung ist ortsfest ausgebildet. Sie umfaßt eine im Schiebergehäuse 11 angeordneten Dichtring 35, dessen der Schieberplatte 16 zugewandte Seite mit einer Aufpanzerung 36 versehen ist. Schieberplattenseitig ist diese Aufpanzerung 36 geschliffen und poliert unter Ausbildung einer entsprechenden Gehäusedichtfläche 14.

Die druckseitig angeordnete Gehäusedichtung umfaßt einen elastisch vorgespannten Dichtring 23 mit Aufpanzerung 25 und Gehäusedichtfläche 15, die ebenso bearbeitet ist wie die Gehäusedichtfläche 14 der gehäusefesten Dichtrings 35. Der elastisch vorgespannte Dichtring 23 weist an seiner der Schieberplatte 16 bzw. Rohrbrücke 20 abgewandten Seite eine ringförmig umlaufende Keilfläche 37 auf, gegen die ein unter elastischer Vorspannung stehender Ringkeil 38 drückbar ist, wobei der Ringkeil 38 sich an der Keilfläche 37 des Dichtrings 23 einerseits und an einer umlaufenden Ringwand, hier radial äußeren Begrenzung 39 einer den Dichtring 23 aufneh menden Ringnut 40 im Gehäuse 11 andererseits abstützt derart, daß dadurch zugleich eine Abdichtung des Gehäuses erhalten wird. Der Ringkeil hat also sowohl die Funktion einer Gehäuseabdichtung als auch die Funktion, Maßtoleranzen auszugleichen. Der Ringkeil 38 wird durch einen im Querschnitt L-förmig gestalteten Druckring 41 beaufschlagt, der unter der Vorspannung einer Druckfeder 42 steht. Selbstverständlich sind mehrere gleichmäßig über dem Umfang verteilt angeordnete Druckfedern 42 vorgesehen, die den Druckring 41 gleichmäßig über den Umfang vorspannen.

Der Dichtring 43 hat ebenfalls einen L-förmig ausgebildeten Grund-Querschnitt. Dichtring 23 und Druckring 41 sind innerhalb der Gehäusenut 40 so plaziert, daß ihre Querschnitte um 180° zueinander verkehrt liegen.

Diese Ausführungsform eignet sich insbesondere zum nachträglichen Einbau elastisch vorgespannter Gehäusedichtungen oder zur Reperatur, da durch den erwähnten Ringkeil 38 Toleranzen sowohl in radialer als auch axialer Richtung ausgeglichen werden können.

Die elastisch vorgespannte Gehäusedichtung gemäß Figur 2 kommt vor allem dann zum Einsatz, wenn eine innerhalb der Gehäusenut 40 angeordnete Weichdichtung ersetzt werden soll, z. B. bedingt durch Verschleiß derselben.

Es sei auch noch darauf hingewiesen, daß der Ringkeil 38 vorzugsweise aus Graphit oder dgl. wärmebeständigem sowie gleit- und in Grenzen elastisch verformbarem Dichtmaterial besteht. Statt Graphit ist auch Keramik als Material für den Ringkeil 38 denkbar.

Vorzugsweise weisen die einander zugewandten Keilflächen von Ringkeil 38 und Dichtring 23 einen unterschiedlichen Konus auf, derart, daß die elastische Vorspannung den Ringkeil 38 zum Rohrdurchgang dichtpreßt.

Die Druckfedern 42 sind so dimensioniert, daß sie in der Lage sind, die Schieberplatte 16 gegen den anstehenden Druck zum Gehäuse 11 hin dichtzudrücken.

## Patentansprüche

1. Einplatten-Schieber, insbesondere Einplatten-Rohrbrückenschieber, mit einer Schieberplatte (16) und gegebenenfalls Rohrbrücke (20), die zum Verschließen oder Öffnen eines in einem Gehäuse (11) ausgebildeten Fluiddurchgangs (17) durch eine Betätigungseinrichtung innerhalb dieses Gehäuses (11) verschiebbar ist bzw. sind, wobei die Schieberplatte (16) bzw. Rohrbrücke (20) randseitig Dichtflächen aufweist, die mit gehäuseseitig angeordneten Dichtflächen, insbesondere Ringdichtflächen (14, 15) korrespondieren und wenigstens eine der gehäuseseitigen Dichtflächen (14, 15) Teil eines im Gehäuse (11) angeordneten Dichtringes (23) ist, der unter elastischer Vorspannung an der zugewandten Dichtfläche der Schieberplatte (16) bzw. Rohrbrücke (20) anliegt, **dadurch gekennzeichnet, daβ**
der elastisch vorgespannte Dichtring (23) an seiner der Schieberplatte (16) bzw. Rohrbrücke (20) abgewandten Seite eine ringförmig umlaufende Keilfläche (37) aufweist, gegen die ein unter elastischer Vorspannung stehender Ringkeil (38) drückbar ist, wobei der Ringkeil (38) sich an der Keilfläche (37) des Dichtrings (23) einerseits und an einer umlaufenden Ringwand, nämlich an einer radial inneren oder radial äußeren (39) Begrenzung einer den Dichtring (23) aufnehmenden Ringnut (40) im Gehäuse (11) andererseits abstützt derart, daß dadurch zugleich eine Abdichtung des Gehäuses (11) gegenüber dem Fluiddurchgang (17) bzw. des Fluiddurchgangs (17) gegenüber der äußeren Umgebung erhalten wird.

2. Schieber nach Anspruch 1,
**dadurch gekennzeichnet, daß**
die am Dichtring (23 bzw. 35) ausgebildete Dichtfläche (15 bzw. 14) eine entsprechend bearbeitete, insbesondere durch Schleifen und Polieren bearbeitete Fläche einer Aufpanzerung (25 bzw. 36) an der der Schieberplatte (16) bzw. Rohrbrücke (20) zugewandten Seite des Dichtrings ist.

3. Schieber nach Anspruch 1 oder 2,
**dadurch gekennzeichnet, daß**
der Ringkeil (38) aus Graphitmaterial oder dgl. wärmebeständigem sowie gleit- und in Grenzen elastisch verformbarem Dichtmaterial besteht.

4. Schieber nach Anspruch 1,
**dadurch gekennzeichnet, daß**
den gehäuseseitig angeordneten Dichtringen (23, 41) in Richtung von radial innen nach radial außen gesehen jeweils ein Abstreifring vorgeordnet ist, und daß die Dichtringe (23, 41) aus weichelastischem Material bestehen.

5. Schieber nach Anspruch 4,
**dadurch gekennzeichnet, daβ**
sowohl die Dichtringe (23, 41) als auch die Abstreifringe gehäuseseitig über weichelastische Flachdichtungen abgestützt sind.

6. Schieber nach Anspruch 5,
**dadurch gekennzeichnet, daβ**
die Flachdichtungen aus papierenem und/oder textilem Material bestehen.

## Claims

1. A single-plate slide valve, in particular a single-plate tube-bridge slide valve, with a slide plate (16) and if applicable a tube bridge (20) which, for the purpose of closing or opening a fluid passage (17) formed in a housing (11), is or are displaceable within this housing (11) by means of an actuating device, the slide plate (16) or tube bridge (20) having sealing surfaces on the margin side which correspond to sealing surfaces, in particular annular sealing surfaces (14, 15), arranged on the housing side and at least one of the housing-side sealing surfaces (14, 15) being part of a sealing ring (23) arranged in the housing (11), the said sealing ring (23) butting against the facing sealing surface of the slide plate(16) or tube bridge (20) under elastic prestressing, **characterised in that**, on its side facing away from the slide plate (16) or tube bridge (20), the elastically prestressed sealing ring (23) has an annular wedge surface (37) against which an elastically prestressed ring wedge (38) can be pressed, the ring wedge (38) being supported against the wedge surface (37) of the sealing ring (23) on the one hand and against a circumferential wall, namely against a radially inner or radially outer (39) boundary of an annular groove (40) accommodating the sealing ring (23) in the housing (11) on the other, in such a way that by this means sealing both of the housing (11) from the fluid passage (17) and of the fluid passage (17) from the external environment is achieved.

2. A slide valve according to Claim 1, **characterised in that** the sealing surface (15 or 14) formed on the sealing ring (23 or 35) is an appropriately prepared surface of armouring (25 or 36), prepared in particular by smoothing and polishing, on the side of the sealing ring facing the slide plate (16) or tube bridge (20).

3. A slide valve according to Claim 1 or 2, **characterised in that** the ring wedge (38) consists of graphite material or similar heat-resisting, and slidable and within limits elastically deformable sealing material.

4. A slide valve according to Claim 1, **characterised in that**, when viewed in the direction from radially inside to radially outside, a scraper ring is arranged upstream of each of the sealing rings (23, 41) arranged on the housing side, and that the sealing rings (23, 41) consist of flexible material.

5. A slide valve according to Claim 4, **characterised in that** the sealing rings (23, 41) and the scraper rings are supported on the housing side via flexible flat seals.

6. A slide valve according to Claim 5, **characterised in that** the flat seals consist of paper and/or textile material.

## Revendications

1. Vanne à opercule unique, en particulier vanne à pont tubulaire à opercule unique, comprenant un opercule (16) et éventuellement un pont tubulaire (20), qui peut ou peuvent coulisser par un dispositif de manoeuvre à l'intérieur d'un corps (11) pour la fermeture ou l'ouverture d'un passage de fluide (17) réalisé dans ce corps (11), l'opercule (16) ou le pont tubulaire (20) présentant côté bord des portées de joints, qui correspondent à des portées de joints disposées côté corps, en particulier à des portées de joints annulaires (14, 15), et au moins l'une des portées de joints côté corps (14, 15) faisant partie d'une bague d'étanchéité (23) disposée dans le corps (11), qui s'applique sous précontrainte élastique sur la portée de joint tournée vers cette dernière de l'opercule (16) ou du pont tubulaire (20), **caractérisée en ce que** la bague d'étanchéité (23) précontrainte élastiquement présente, sur son côté opposé à l'opercule (16) ou au pont tubulaire (20), une surface cunéiforme (37) périphérique annulaire, contre laquelle peut être pressé un coin annulaire (38) sous précontrainte élastique, le coin annulaire (38) s'appuyant sur la surface cunéiforme (37) de la bague d'étanchéité (23), d'un côté, et sur une paroi annulaire périphérique, à savoir sur une délimitation radiale interne ou radiale externe (39) d'une rainure annulaire (40) recevant la bague d'étanchéité (23) dans le corps (11), de sorte qu'une étanchéité du corps (11) par rapport au passage de fluide (17) ou du passage de fluide (17) par rapport à l'ambiance extérieure est de ce fait simultanément obtenue.

2. Vanne suivant la revendication 1, **caractérisée en ce que** la portée de joint (15 ou 14), réalisée sur la bague d'étanchéité (23 ou 35), est une surface usinée en conséquence, en particulier par meulage et polissage, d'un blindage (25 ou 36) sur le côté de la bague d'étanchéité tourné vers l'opercule (16) ou le pont tubulaire (20).

3. Vanne suivant l'une des revendications 1 et 2,
**caractérisée en ce que** le coin annulaire (38) se compose de matériau graphitique ou autre matériau résistant à la chaleur, ainsi que d'un matériau d'étanchéité glissant et déformable élastiquement dans des limites.

4. Vanne suivant la revendication 1, **caractérisée en ce qu'**une bague de raclage est respectivement montée devant les bagues d'étanchéité (23, 41) disposées côté corps, vu du sens radial interne vers le sens radial externe, et **en ce que** les bagues d'étanchéité (23, 41) se composent d'un matériau souple et élastique.

5. Vanne suivant la revendication 4, **caractérisée en ce qu'**aussi bien les bagues d'étanchéité (23, 41) que les bagues de raclage sont supportées côté corps par l'intermédiaire de garnitures plates souples et élastiques.

6. Vanne suivant la revendication 5, **caractérisée en ce que** les garnitures plates se composent d'une matière en papier et/ou textile.
